# EUROPÄISCHE PATENTSCHRIFT

(11) **EP 1 619 356 B1**
(45) Veröffentlichungstag und Bekanntmachung des Hinweises auf die Patenterteilung: **16.03.2016**
(21) Anmeldenummer: 04017488.0
(22) Anmeldetag: 23.07.2004
(51) Int. Cl.: F01D 25/16, F01D 25/18, F16C 17/04, F16C 33/10

(54) **Axiallager für einen Turbolader**
Thrust bearing for a turbocharger
Palier de butée pour turbocompresseur

(43) Veröffentlichungstag der Anmeldung: 25.01.2006
(73) Patentinhaber: BorgWarner, Inc., Auburn Hills, MI 48326-2872 (US)
(72) Erfinder: Krauss, Paul, 67307 Göllheim (DE); Weinitschke, Thomas, 67227 Frankenthal (DE); Eggert, Helmut, 67295 Bolanden (DE); Schappert, Klaus, 67722 Winnweiler (DE); Stoll, Norbert, 67819 Kriegsfeld (DE)
(74) Vertreter: Wolf, Eckhard

(56) Entgegenhaltungen:
- EP-A- 0 599 520
- DD-A- 118 313
- DE-U- 20 317 497
- US-A- 3 043 636
- US-A1- 2003 039 417

## Beschreibung

Die Erfindung betrifft ein Axiallager für einen Turbolader, mit einem im Wesentlichen scheibenförmigen Lagerkörper mit einer zentralen Durchtrittsöffung für eine Welle, mit mindestens einer die Durchtrittsöffnung umgebenden Lagerfläche für einen an der Welle angeordneten Bund und mit mindestens einem von einem radial äußeren Bereich des Lagerkörpers zur Durchtrittsöffnung führenden Ölversorgungskanal. Die Erfindung betrifft weiterhin einen Turbolader mit einem derartigen Axiallager.

Die Welle eines Turboladers dreht sich mit hoher Geschwindigkeit und muss dabei sowohl radial gelagert sein als auch axial, da je nach Lastzustand entweder durch das Verdichterrad oder das Turbinenrad axial wirkende Kräfte erzeugt werden. Zur Aufnahme dieser axialen Kräfte dient ein fest im Wellengehäuse des Turboladers angeordnetes Axiallager der eingangs genannten Art, an dem sich die Welle auf jeder Seite mit einem wellenfesten, durch einen dünnen Schmierfilm vom Axiallager getrennten Bund abstützt. Zur Versorgung der Lagerflächen mit Schmieröl ist in einem radial äußeren Bereich des Lagerkörpers eine Ausnehmung vorgesehen, die über Versorgungskanäle im Lagergehäuse des Turboladers mit unter Druck stehendem Öl beaufschlag wird. Es ist hierbei jedoch erforderlich, das Schmieröl zunächst radial nach innen zur Welle zu führen, von wo aus es dann über Ölversorgungskanäle zu den Lagerflächen gelangen kann. Hierzu weist das bekannte Axiallager mehrere Radialbohrungen auf, die von der Ausnehmung zur Durchtrittsöffnung führen. Der Nachteil dieser Bauart besteht darin, dass es auf Grund der flachen Bauform des Lagerkörpers nicht möglich ist, direkt von der Ausnehmung aus zur Durchtrittsöffnung zu Bohren. Vielmehr muß der Lagerkörper vom Außenrand her komplett radial durchbohrt werden. Hierdurch entstehen neben den gewünschten Kanälen zwischen der Ausnehmung und der Durchtrittsöffung zusätzliche Kanäle zwischen der Ausnehmung und dem Außenrand des Lagerkörpers. Um ein Austreten des Schmieröls durch diese zusätzlichen Kanäle zu verhindern, müssen diese wieder verschlossen werden. Sowohl das Bohren als auch das Verschließen der zusätzlichen Kanäle ist äußerst aufwendig und trägt in erheblichem Maß zu den Gesamtkosten des Axiallagers bei. Zudem besteht die Gefahr, dass durch einen Mangel beim Verschließen eines Kanals dieser später wieder frei wird, was auf Grund des dann zusammenbrechenden Schmieröldrucks zu einer Zerstörung des Lagers führen kann.

Axiallager für turbolader gemäß den Stand der Technik sind aus DE 20317497 U1 und DD118313 bekannt.

Ausgehend hiervon besteht die Aufgabe der vorliegenden Erfindung darin, ein Axiallager der eingangs genannten Art bereitzustellen, bei dem die Lagerflächen auf kostengünstige und sichere Weise mit Schmieröl versorgt werden können.

Zur Lösung dieser Aufgabe wird die in dem Patentanspruch 1 angegebene Merkmalskombination vorgeschlagen. Vorteilhafte Weiterbildungen und Ausgestaltungen der Erfindung ergeben sich aus den abhängigen Ansprüchen.

Die Erfindung geht von dem Gedanken aus, dass ein radiales Durchbohren des Lagerkörpers vermieden werden kann, wenn der Ölversorgungskanal von der flächenseite her in den Lagerkörper eingebracht werden kann. Gemäß der Erfindung ist daher vorgesehen, dass der mindestens eine Ölversorgungskanal als Nut ausgebildet ist. Hierdurch ist es möglich, den Lagerkörper zusammen mit den Nuten mittels eines Gesenkschmiede-, Fräs- oder Stanzverfahrens herzustellen. Das Bohren und Verschließen zusätzlicher Kanäle ist nicht mehr erforderlich, wodurch die Herstellungskosten des Axiallagers erheblich verringert werden.

Um ein Abfließen des Schmieröls nach dem Durchströmen des Lagers zu ermöglichen, ist die Lagerfläche von einer Ölabflußnut umschlossen, über die das Schmieröl nach unten in das Lagergehäuse des Turboladers abfließen kann. Da diese Ölabflußnut radial zwischen der Lagerfläche und der Öltasche angeordnet ist, wird sie von dem mindestens einen Ölversorgungskanal gekreuzt. Um einen übermäßigen Öldruckverlust über die Ölabflußnut zu vermeiden, ist die Querschnittsfläche des Ölversorgungskanals zweckmäßig erheblich größer als die Querschnittsfläche der Ölabflußnut.

In bevorzugter Ausgestaltung der Erfindung weist das Lager eine mit Schmieröl beaufschlagbare Öltasche auf, die sich über einen Teilumfang des Lagerkörpers konzentrisch zur Durchtrittsöffnung für die Welle erstreckt und von der aus sich der Ölversorgungskanal zur Durchtrittsöffnung erstreckt. Die Öltasche bildet ein Reservoir für das Schmieröl und unterstützt somit eine sichere Ölversorgung des Lagers.

Weiterhin können auf beiden Seiten des Lagerkörpers die Durchtrittsöffnung umgebende Lagerflächen für jeweils einen auf jeder Seite des Lagers an der Welle angeordneten Bund vorgesehen sein, so dass die Welle in beiden Axialrichtungen gelagert wird.

Vorzugsweise ist der Ölversorgungskanal als Radialnut ausgebildet und in weiter bevorzugter Ausgestaltung sind zwei oder drei als Radialnuten ausgebildete Ölversorgungskanäle vorgesehen. Grundsätzlich wird sich die Anzahl der Nuten nach der Größe und dem Anwendungsgebiet des Axiallagers richten, so dass auch mehr als drei Nuten vorgesehen sein können. Hierdurch wird sichergestellt, dass sämtliche Lagerbereiche hinreichend mit Schmieröl versorgt werden.

Die Lagerfläche ist zweckmäßig in eine Mehrzahl durch Nuten voneinander getrennte Keilflächen unterteilt, wobei die Keilflächen vorzugsweise gleichsinnig in Umfangsrichtung und in Drehrichtung der Welle angestellt sind. Die Nuten münden jeweils in die Durchtrittsöffnung für die Welle und versorgen jeweils das flache Ende der Keilflächen mit Schmieröl, welches dann von dem rotierenden Bund der Welle mitgenommen wird und einen entsprechenden Schmierfilm bildet. Mit Ausnahme der Ölversorgungskanäle sollten die Nuten den Außenrand der Lagerfläche nicht durchbrechen, da anderenfalls der erforderliche Öldruck im Lager nicht aufrecht erhalten werden könnte.

Die Form der Ölversorgungskanäle kann variiert und an die jeweilige Anwendung angepaßt werden. Es gilt einerseits die Tragfähigkeit des Lagers sicherzustellen und andererseits die Reibungsverluste im Schmierfilm zu minimieren. Diese beiden Wirkungen sind gegenläufig, d.h. je mehr Öl in den Lagerbereich gefördert wird, je größer also der Querschnitt der Nuten ist, desto höher ist die Tragfähigkeit des Lagers. Andererseits wird bei den sehr hohen Drehzahlen der Welle hierdurch auch eine wesentlich größere Reibungsarbeit geleistet, die zu entsprechenden mechanischen Verlusten führt, so dass der Wirkungsgrad des Lagers bei größerer Ölzufuhr beeinträchtigt wird. In bevorzugter Ausgestaltung der Erfindung weist der Ölversorgungskanal einen im Wesentlichen rechteckigen, V-förmigen, halbkreisförmigen oder halbelliptischen Querschnitt auf. Diese Formen lassen sich auf einfache Weise mittels eines Gesenkschmiede-, Fräs- oder Stanzverfahrens herstellen.

Da die Keilflächen sehr flach angestellt sind, lassen sich diese nicht mit hinreichender Genauigkeit mittels eines Gesenkschmiede-, Fräs- oder Stanzverfahrens herstellen. In bevorzugter Ausgestaltung der Erfindung werden die Keilflächen daher nach dem Gesenkschmieden, Stanzen oder Fräsen und nachfolgendem Planschleifen des Lagerkörpers aufgeprägt.

Im Folgenden wird die Erfindung anhand eines in der Zeichnung dargestellten Ausführungsbeispiels näher erläutert. Es zeigt:

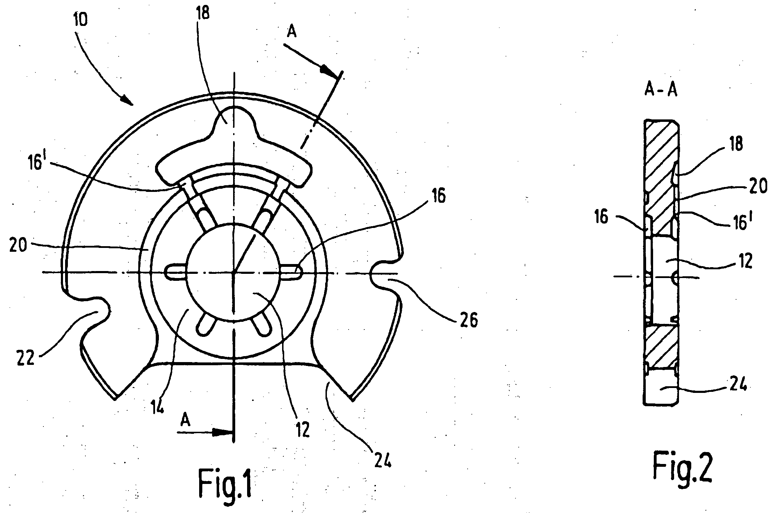

- Fig. 1: eine Vorderansicht eines Axiallagers mit als Nuten ausgebildeten Ölversorgungskanälen; und
- Fig. 2: einen Querschnitt durch das Lager gemäß Fig. 1 entlang der Linie A-A.

Das in der Zeichnung dargestellte Axiallager 10 weist eine zentrale Durchtrittsöffnung 12 für eine Welle, beispielsweise die Welle eines Turboladers, auf. Die Öffnung 12 ist von sechs (nicht näher dargestellten) Keilflächen 14 umgeben, die zusammen die Lagerfläche des Lagers bilden. Die Keilflächen 14 sind in Umfangsrichtung durch sechs sternförmig angeordnete Nuten 16, 16' voneinander getrennt, über die die Keilflächen 14 mit Schmieröl versorgt werden. Während die Nuten 16 die Lagerfläche radial nur teilweise durchdringen, sind die Nuten 16' radial nach außen verlängert und münden in die Öltasche 18. Die Lagerfläche ist noch von einer Umfangsnut 20 umgeben, über die das Schmieröl nach dem Durchströmen des Lagers abfließen kann, wobei die Querschnittsfläche dieser Nut kleiner ist als die Querschnittsfläche der Nuten 16', um einen hinreichenden Ölfluß zur Welle zu gewährleisten. Die Randausnehmungen 22, 24, 26 dienen der Montage und Lagefixierung des Lagerköpers im Lagergehäuse eines Turboladers.

Im Betrieb wird die Öltasche 18 mit unter Druck stehendem Schmieröl beaufschlagt. Über die Nuten 16' strömt das Öl zu der sich drehenden Welle und wird von dieser in Umfangsrichtung verteilt, so dass auch die Nuten 16 mit Schmieröl versorgt werden. Da die Lagerfläche durch sechs in Umfangsrichtung angestellte, in Drehrichtung der Welle ansteigende Keilflächen gebildet ist, ist zwischen den Keilflächen und dem ebenen Bund der Welle jeweils ein entsprechender Keilraum gebildet, wobei die Ölversorgung über die an die stumpfen Enden der Keilräume angrenzenden Nuten 16, 16' erfolgt.

Die Rückseite des Lagerkörpers gleicht der Vorderseite hinsichtlich der Lagerfläche und den Nuten 16, jedoch weist sie weder eine Öltasche noch Ölversorgungskanäle 16' auf. Vielmehr erfolgt die Ölversorgung der rückseitigen Nuten 16 über die zentrale Durchtrittsöffnung 12 und die sich in dieser drehenden Welle.

Zusammenfassend ist folgendes festzuhalten: Die Erfindung betrifft ein Axiallager, insbesondere für einen Turbolader, mit einem im Wesentlichen scheibenförmigen Lagerkörper 10 mit einer zentralen Durchtrittsöffung 12 für eine Welle, mit mindestens einer die Durchtrittsöffnung 12 umgebenden Lagerfläche 14 für einen an der Welle angeordneten Bund und mit mindestens einem von einem radial äußeren Bereich des Lagerkörpers zur Durchtrittsöffnung 12 führenden Ülversorgungskanal. Um eine möglichst kostengünstige Herstellung des Axiallagers zu ermöglichen, wird gemäß der Erfindung vorgeschlagen, dass der mindestens eine Ölversorgungskanal als Nut 16' ausgebildet ist.

## Patentansprüche

1. Axiallager für einen Turbolader, mit einem im Wesentlichen scheibenförmigen Lagerkörper (10) mit einer zentralen Durchtrittsöffung (12) für eine Welle, mit mindestens einer die Durchtrittsöffnung (12) umgebenden Lagerfläche (14) für einen an der Welle angeordneten Bund und mit mindestens einem von einem radial äußeren Bereich des Lagerkörpers zur Durchtrittsöffnung (12) führenden, als Nut (16') ausgebildeten Ölversorgungskanal, **dadurch gekennzeichnet, dass** die Lagerfläche von einer konzentrisch zur Durchtrittsöffnung (12) angeordneten Ölabflußnut (20) umschlossen ist und dass die Querschnittsfläche des Ölversorgungskanals (16') größer ist als die Querschnittsfläche der Ölabflußnut (20).

2. Axiallager nach Anspruch 1, **gekennzeichnet durch** eine mit Schmieröl beaufschlagbare Öltasche (18), die sich über einen Teilumfang des Lagerkörpers (10) konzentrisch zur Durchtrittsöffnung (12) für die Welle erstreckt und von der aus sich der Ölversorgungskanal zur Durchtrittsöffnung (12) erstreckt.

3. Axiallager nach Anspruch 1 oder 2, **gekennzeichnet durch** auf beiden Seiten des Lagerkörpers (10) die Durchtrittsöffnung (12) umgebende Lagerflächen (14) für jeweils einen auf jeder Seite des Lagers an der Welle angeordneten Bund.

4. Axiallager nach einem der Ansprüche 1 bis 3, **dadurch gekennzeichnet, dass** der Ölversorgungskanal als Radialnut (16') ausgebildet ist.

5. Axiallager nach einem der Ansprüche 1 bis 4, **dadurch gekennzeichnet, dass** zwei oder drei als Radialnuten (16') ausgebildete Ölversorgungskanäle vorgesehen sind.

6. Axiallager nach einem der Ansprüche 1 bis 5, **dadurch gekennzeichnet, dass** die Lagerfläche in eine Mehrzahl durch Nuten (16, 16') voneinander getrennte Keilflächen (14) unterteilt ist.

7. Axiallager nach Anspruch 6, **dadurch gekennzeichnet, dass** die Keilflächen (14) gleichsinnig in Umfangsrichtung angestellt sind.

8. Axiallager nach Anspruch 6 oder 7, **dadurch gekennzeichnet, dass** die Nuten (16) mit Ausnahme der Ölversorgungskanäle den Außenrand der Lagerfläche nicht durchbrechen.

9. Axiallager nach einem der Ansprüche 1 bis 8, **dadurch gekennzeichnet, dass** der Ölversorgungskanal (16') einen im Wesentlichen rechteckigen, V-förmigen, halbkreisförmigen öder halbelliptischen Querschnitt aufweist.

10. Axiallager nach einem der Ansprüche 1 bis 9, **dadurch gekennzeichnet, dass** der Lagerkörper (10) zusammen mit den Nuten (16, 16') mittels eines Gesenkschmiede-, Fräs- oder Stanzverfahrens hergestellt ist.

11. Axiallager nach Anspruch 10, **dadurch gekennzeichnet, dass** die Keilflächen (14) aufgeprägt sind.

12. Turbolader mit einem Axiallager nach einem der Ansprüche 1 bis 11.

## Claims

1. Thrust bearing for a turbocharger having an essentially disk-shaped bearing body (10) with a central through opening (12) for a shaft, with at least one bearing surface (14) surrounding the through opening (12) for a collar arranged on the shaft and with at least one oil supply duct which leads from a radially outer region of the bearing body to the through opening (12) and which is formed as a groove (16'), **characterized in that** the bearing surface is enclosed by an oil discharge groove (20) arranged concentrically with respect to the through opening (12), and **in that** the cross section area of the oil supply duct (16') is larger than the cross section area of the oil discharge groove (20).

2. Thrust bearing according to Claim 1, **characterized by** an oil pocket (18) which can be charged with lubricating oil, and which extends over a partial circumference of the bearing body (10) concentrically with respect to the through opening (12) for the shaft, and whence the oil supply duct extends to the through opening (12).

3. Thrust bearing according to Claim 1 or 2, **characterized by** bearing surfaces (14), surrounding the through opening (12) on both sides of the bearing body (10), for in each case one collar arranged on the shaft on each side of the bearing.

4. Thrust bearing according to one of Claims 1 to 3, **characterized in that** the oil supply duct is formed as a radial groove (16').

5. Thrust bearing according to one of Claims 1 to 4, **characterized in that** there are provided two or three oil supply ducts formed as radial grooves (16').

6. Thrust bearing according to one of Claims 1 to 5, **characterized in that** the bearing surface is divided into a multiplicity of wedge surfaces (14) separated from one another by grooves (16, 16').

7. Thrust bearing according to Claim 6, **characterized in that** the wedge surfaces (14) are positioned in the same orientation in the circumferential direction.

8. Thrust bearing according to Claim 6 or 7, **characterized in that** the grooves (16), with the exception of the oil supply ducts, do not cross the outer rim of the bearing surface.

9. Thrust bearing according to one of Claims 1 to 8, **characterized in that** the cross section of the oil supply duct (16') is essentially rectangular, V-shaped, semicircular or semi-elliptical.

10. Thrust bearing according to one of Claims 1 to 9, **characterized in that** the bearing body (10), together with the grooves (16, 16'), is produced by means of a drop-forging, milling or stamping process.

11. Thrust bearing according to Claim 10, **characterized in that** the wedge surfaces (14) are stamped.

12. Turbocharger having a thrust bearing according to one of Claims 1 to 11.

## Revendications

1. Palier de butée pour un turbocompresseur, avec un corps de palier (10) pour l'essentiel en forme de disque avec une ouverture de passage (12) centrale prévue pour un arbre, avec au moins une surface de palier (14) entourant l'ouverture de passage (12) pour un collet disposé au niveau de l'arbre et avec au moins un canal d'alimentation en huile allant d'une région, extérieure dans le plan radial, du corps de palier à l'ouverture de passage (12) et réalisé sous la forme d'une rainure (16'), **caractérisé en ce que** la surface de palier est ceinte par une rainure d'évacuation d'huile (20) disposée concentriquement par rapport à l'ouverture de passage (12) et que la surface de section transversale du canal d'alimentation en huile (16') est plus grande que la surface de section transversale de la rainure d'évacuation d'huile (20).

2. Palier de butée selon la revendication 1, **caractérisé par** une poche d'huile (18) pouvant être alimentée en huile de lubrification, s'étendant concentriquement à l'ouverture de passage (12) prévue pour l'arbre sur un périmètre partiel du corps de palier (10) et s'étendant du canal d'alimentation en huile à l'ouverture de passage (12).

3. Palier de butée selon la revendication 1 ou 2, **caractérisé par** les surfaces de palier (14) entourant l'ouverture de passage (12) sur les deux côtés du corps de palier (10) pour respectivement un collet disposé sur chaque côté du palier au niveau de l'arbre.

4. Palier de butée selon l'une quelconque des revendications 1 à 3, **caractérisé en ce que** le canal d'alimentation en huile est réalisé sous la forme d'une rainure radiale (16').

5. Palier de butée selon l'une quelconque des revendications 1 à 4, **caractérisé en ce que** deux ou trois canaux d'alimentation en huile réalisés sous la forme de rainures radiales (16') sont prévus.

6. Palier de butée selon l'une quelconque des revendications 1 à 5, **caractérisé en ce que** la surface de palier est subdivisée en une pluralité de surfaces de clavette (14) séparées les unes des autres par des rainures (16, 16').

7. Palier de butée selon la revendication 6, **caractérisé en ce que** les surfaces de clavette (14) sont placées dans le même sens dans la direction périphérique.

8. Palier de butée selon la revendication 6 ou 7, **caractérisé en ce que** les rainures (16) avec la sortie des canaux d'alimentation en huile ne percent pas le bord extérieur de la surface de palier.

9. Palier de butée selon l'une quelconque des revendications 1 à 8, **caractérisé en ce que** le canal d'alimentation en huile (16') comporte une section transversale pour l'essentiel rectangulaire, en forme de V, en forme de demi-cercle ou de demi-ellipse.

10. Palier de butée selon l'une quelconque des revendications 1 à 9, **caractérisé en ce que** le corps de palier (10) est fabriqué, conjointement avec les rainures (16, 16'), à l'aide d'un procédé de forge à matrice, de fraisage ou d'estampage.

11. Palier de butée selon la revendication 10, **caractérisé en ce que** les surfaces de clavette (14) sont gravées.

12. Turbocompresseur avec un palier de butée selon l'une quelconque des revendications 1 à 11.
